(19) Europäisches Patentamt
European Patent Office
Office européen des brevets

(11) **EP 4 429 375 A1**

(12) **EUROPEAN PATENT APPLICATION**
published in accordance with Art. 153(4) EPC

(43) Date of publication:
**11.09.2024 Bulletin 2024/37**

(21) Application number: **22948662.6**

(22) Date of filing: **01.07.2022**

(51) International Patent Classification (IPC):
**H04W 72/04** $^{(2023.01)}$  **H04W 72/12** $^{(2023.01)}$

(52) Cooperative Patent Classification (CPC):
**H04W 72/04; H04W 72/12**

(86) International application number:
**PCT/CN2022/103272**

(87) International publication number:
**WO 2024/000562 (04.01.2024 Gazette 2024/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **New H3C Technologies Co., Ltd.**
**Hangzhou, Zhejiang 310052 (CN)**

(72) Inventors:
• WU, Pin
  **Beijing 100102 (CN)**
• KONG, Lei
  **Beijing 100102 (CN)**
• CHU, Jun
  **Beijing 100102 (CN)**

(74) Representative: **Grünecker Patent- und Rechtsanwälte PartG mbB Leopoldstraße 4 80802 München (DE)**

(54) **DATA TRANSMISSION METHOD, APPARATUS, STORAGE MEDIUM AND ELECTRONIC DEVICE**

(57) The present specification discloses a data transmission method and apparatus, a storage medium, and an electronic device. In the examples of the present specification, a BS or UE checks various data that is obtained by encoding a same original data for a DL or UL transmission with redundant information separately, and obtains the checking results of the various data. The BS determines a channel quality parameter for transmitting the various data between the BS and the UE based on a determined checking result in overall corresponding to first N data in the various data and the checking result of every remaining data. AN adjusted transmission strategy is obtained according to the channel quality parameter, and the data transmissions are performed in accordance with the adjusted transmission strategy. According to this method, the changes of the channel quality parameter between the BS and the UE are obtained based on the checking result of every data, and thus the transmission strategy following the changes of the channel quality parameter is obtained, which can improve a data transmission reliability on the basis of ensuring a data transmission rate.

FIG. 1

**Description**

**TECHNICAL FIELD**

The present specification relates to the field of mobile communications, and in particular, relates to a data transmission method, apparatus, storage medium and electronic device.

**BACKGROUND**

For the field of 5th generation mobile communication technologies (5G) or 6th generation mobile communication technologies (6G), data transmission reliability in a network communication system is very important to a further ultra-reliability and low-latency communication (fURLLC) scenario, such as a motion control scenario and a Tactile Internet.

In the case of a semi-static scheduling in the related arts, a transmitter transmits the same data to a receiver through a plurality of time-frequency resources in accordance with a pre-configured number of repetitions and by using a certain modulation coding scheme (MCS). The receiver combines multiple received data to obtain a final combined data, and performs a cyclic redundancy check (CRC) on the final combined data to obtain a final checking result. It is determined whether to trigger a hybrid automatic repeat request (HARQ) based on the final checking result, so as to improve the data transmission reliability.

In the case of the semi-static scheduling in the related arts, however, both the number of repetitions and the MCS are pre-configured and cannot be adaptively adjusted according to the varies of channel state between the transmitter and the receiver. As the channel state between the transmitter and the receiver deteriorates continuously, the number of repetitions and the MCS that are pre-configured, if still used, may result in errors in the data transmissions between the transmitter and the receiver. As the channel state between the transmitter and the receiver improves continuously, the number of repetitions and the MCS that are pre-configured, if still used, may slower the data transmission rate between the transmitter and the receiver or result in a waste of time-frequency resources.

**SUMMARY**

The examples of the present specification provide a data transmission method, apparatus, storage medium and electronic device, so as to partially solve the problems existing in the above-mentioned related arts.

The examples of the present specification take the following technical solutions.

The present specification provides a data transmission method, which includes: receiving, by user equipment (UE), various downlink (DL) data transmitted by a base station (BS); and/or, transmitting, by the UE, various uplink (UL) data to the BS, so that the BS obtains a first UL checking result in overall corresponding to first N UL data in the various UL data and a checking result of every remaining UL data in the various UL data, wherein N is a positive integer, and wherein various data transmitted by a transmitter is obtained by encoding a same original data with redundant information separately; when the UE receives the various DL data transmitted by the BS, by the UE, checking the various DL data to obtain checking results of the various DL data; obtaining a first DL checking result in overall corresponding to first N DL data by processing the checking results of the first N DL data in the various DL data; and returning the first DL checking result and the checking result of every remaining DL data in the various DL data to the BS; and receiving a transmission strategy that has been adjusted by the BS, and performing data transmissions with the BS in accordance with the adjusted transmission strategy, wherein the adjusted transmission strategy is determined by the BS according to a target channel quality parameter, and the target channel quality parameter is determined by the BS based on the checking result in overall corresponding to first N data in the various data transmitted by the transmitter and the checking result of every remaining data in the various data.

Optionally, obtaining the first DL checking result in overall corresponding to the first N DL data by processing the checking results of the first N DL data in the various DL data includes: obtaining the first DL checking result in overall corresponding to the first N DL data by performing an AND operation on the checking results of the first N DL data in the various DL data, wherein the first DL checking result is failed if there is a failure in the checking results of the first N DL data, and the first DL checking result is successful if all the checking results of the first N DL data are successful.

Optionally, returning the first DL checking result and the checking result of every remaining DL data in the various DL data to the BS includes: determining feedback information based on the first DL checking result and the checking result of every remaining DL data in the various DL data, and sending the feedback information to the BS.

Optionally, determining the feedback information based on the first DL checking result and the checking result of every remaining DL data in the various DL data includes: obtaining the feedback information that represents the first DL checking result and the checking result of every remaining DL data by encoding the first DL checking result and the checking result of every remaining DL data in the various DL data.

Optionally, determining the feedback information based on the first DL checking result and the checking result of every remaining DL data in the various DL data includes: obtaining a second DL checking result in overall corresponding to the remaining DL data by performing an OR operation on the checking result of every remaining DL data in the various DL data, wherein the second DL checking result is successful if there is a success in the checking result of every remaining DL data, and the second DL checking result is failed if the checking result of every remaining DL data is failed; and obtaining the feedback information that represents the first DL checking result and the second DL checking result by encoding the first DL checking result and the second DL checking result.

Optionally, determining the feedback information based on the first DL checking result and the checking result of every remaining DL data in the various DL data includes: when the original data for a DL transmission is data corresponding to a plurality of transmission processes that satisfies a preset condition, for each original data, determining checking information of the original data based on the first DL checking result obtained by processing the first N DL data in the various DL data corresponding to the original data and the checking result of every remaining DL data in the various DL data corresponding to the original data, wherein it is determined that the data corresponding to the plurality of transmission processes satisfies the preset condition if the data corresponding to the plurality of transmission processes is transmitted by the transmitter in a setting duration; and obtaining the feedback information including the checking information of the data corresponding to the plurality of transmission processes by combining and processing the checking information of the data corresponding to the plurality of transmission processes.

Optionally, sending the feedback information to the BS includes: encoding a scheduling request (SR) and the feedback information, obtaining a coding sequence that includes the feedback information and information indicating whether there is an SR, and sending the coding sequence to the BS.

Optionally, the target channel quality parameter is obtained by the BS through compensating a channel quality parameter used when the transmitter transmits the various data according to a determined target compensation rule, wherein the target compensation rule is determined by the BS based on the checking result in overall corresponding to the first N data in the various data transmitted by the transmitter and the checking result of every remaining data in the various data.

The present specification provides a data transmission method, which includes: receiving, by a BS, various UL data transmitted by UE; and/or, transmitting, by the BS, various DL data to the UE, so that the UE obtains a first DL checking result in overall corresponding to first N DL data in the various DL data and a checking result of every remaining DL data in the various DL data, wherein N is a positive integer, and wherein various data transmitted by a transmitter is obtained by encoding a same original data with redundant information separately; when the BS receives the various UL data transmitted by the UE, by the BS, checking the various UL data to obtain checking results of the various UL data; obtaining a first UL checking result in overall corresponding to first N UL data by processing the checking results of the first N UL data in the various UL data; and when the BS transmits the various DL data to the UE, receiving the first DL checking result in overall corresponding to the first N DL data in the various DL data returned from the UE and the checking result of every remaining DL data in the various DL data; determining a target channel quality parameter based on a checking result in overall corresponding to first N data in the various data transmitted by the transmitter and the checking result of every remaining data in the various data; obtaining an adjusted transmission strategy by adjusting a transmission strategy adopted by the transmitter for transmitting the various data according to the target channel quality parameter; and sending the adjusted transmission strategy to the UE for performing data transmissions with the BS in accordance with the adjusted transmission strategy.

Optionally, receiving the first DL checking result in overall corresponding to the first N DL data in the various DL data returned from the UE and the checking result of every remaining DL data in the various DL data includes: receiving feedback information sent by the UE, and determining, according to the feedback information, the first DL checking result in overall corresponding to the first N DL data in the various DL data and the checking result of every remaining DL data in the various DL data, wherein the feedback information is obtained by the UE after processing the checking results of the first N DL data in the various DL data, and wherein the checking result of every DL data is obtained by the UE through checking the various DL data after receiving the various DL data transmitted by the BS.

Optionally, determining the target channel quality parameter based on the checking result in overall corresponding to the first N data in the various data transmitted by the transmitter and the checking result of every remaining data in the various data includes: determining a target compensation rule based on the checking result in overall corresponding to the first N data in the various data transmitted by the transmitter and the checking result of every remaining data in the various data; and obtaining the target channel quality parameter by compensating the channel quality parameter used when the transmitter transmits the various data according to the target compensation rule.

Optionally, sending the adjusted transmission strategy to the UE includes: sending the adjusted transmission strategy to the UE when monitoring that the transmission strategy adopted by the transmitter for transmitting the various data runs longer than a valid working duration.

The present specification provides a data transmission apparatus, which includes: a receiving module, configured to receive, by UE, various DL data transmitted by a BS; and/or, transmit, by the UE, various UL data to the BS, so that the BS obtains a first UL checking result in overall corresponding to first N UL data in the various UL data and a checking result of every remaining UL data in the various UL data, wherein N is a positive integer, and wherein various data transmitted by a transmitter is obtained by encoding a same original data with redundant information separately; a processing module, configured to when the UE receives the various DL data transmitted by the BS, by the UE, check the various DL data to obtain checking results of the various DL data; obtain a first DL checking result in overall corresponding to first N DL data by processing the checking results of the first N DL data in the various DL data; and return the first DL checking result and the checking result of every remaining DL data in the various DL data to the BS; and a data transmitting module, configured to receive a transmission strategy that has been adjusted by the BS, and perform data transmissions with the BS in accordance with the adjusted transmission strategy, wherein the adjusted transmission strategy is determined by the BS according to a target channel quality parameter, and the target channel quality parameter is determined by the BS based on the checking result in overall corresponding to first N data in the various data transmitted by the transmitter and the checking result of every remaining data in the various data.

The present specification provides a data transmission apparatus, which includes: a receiving module, configured to receive, by a BS, various UL data transmitted by UE; and/or, transmit, by the BS, various DL data to the UE, so that the UE obtains a first DL checking result in overall corresponding to first N DL data in the various DL data and a checking result of every remaining DL data in the various DL data, wherein N is a positive integer, and wherein various data transmitted by a transmitter is obtained by encoding a same original data with redundant information separately; a processing module, configured to when the BS receives the various UL data transmitted by the UE, by the BS, check the various UL data to obtain checking results of the various UL data; obtain a first UL checking result in overall corresponding to first N UL data by processing the checking results of the first N UL data in the various UL data; and when the BS transmits the various DL data to the UE, receive the first DL checking result in overall corresponding to the first N DL data in the various DL data returned from the UE and the checking result of every remaining DL data in the various DL data; a determining module, configured to determine a target channel quality parameter based on a checking result in overall corresponding to first N data in the various data transmitted by the transmitter and the checking result of every remaining data in the various data; an adjusting module, configured to obtain an adjusted transmission strategy by adjusting a transmission strategy adopted by the transmitter for transmitting the various data according to the target channel quality parameter; and a data transmitting module, configured to send the adjusted transmission strategy to the UE for performing data transmissions with the BS in accordance with the adjusted transmission strategy.

The present specification provides a computer-readable storage medium storing a computer program. The computer program, when executed by one or more processors, implements the above data transmission methods.

The present specification provides an electronic device, which includes one or more memories, one or more processors, and a computer program stored in the one or more memories and capable of running on the one or more processors. The one or more processors, when executing the program, implement the above data transmission methods.

At least one of the above technical solutions taken in the examples of the present specification can achieve the following beneficial effects.

In the examples of the present specification, a BS or UE checks various data that is obtained by encoding a same original data for a DL or UL transmission with redundant information separately, and obtains the checking results of the various data. The BS determines a checking result corresponding to first N data in the various data based on the checking results of the various data, and determines a target channel quality parameter based on the checking result in overall corresponding to the first N data and the checking result of every remaining data. An adjusted transmission strategy is obtained according to the target channel quality parameter, and the data transmissions are performed in accordance with the adjusted transmission strategy. According to this method, the changes of the channel quality parameter between the BS and the UE are obtained based on the checking result of every data, and thus the transmission strategy following the changes of the channel quality parameter is obtained, which can improve a data transmission reliability on the basis of ensuring a data transmission rate.

## BRIEF DESCRIPTION OF THE DRAWINGS

The accompanying drawings described here serve to further understand the present specification and constitute a part of the present specification. The examples in the present specification and their descriptions serve to explain the present specification, rather than introduce any inappropriate limitations. In the drawings:

FIG. 1 is a schematic flowchart of a data transmission method in a DL transmission process provided by an example of the present specification.
FIG. 2 is a schematic diagram of a data structure of an MAC CE according to an example of the present specification.
FIG. 3 is a schematic flowchart of a data transmission method in a UL transmission process provided by an example of the present specification.
FIG. 4 is a schematic structure diagram of a data transmission apparatus according to an example of the present specification.

FIG. 5 is a schematic structure diagram of a data transmission apparatus according to an example of the present specification.

FIG. 6 is a schematic structure diagram of an electronic device according to an example of the present specification.

## DETAILED DESCRIPTION OF THE EMBODIMENTS

Ultra-reliability and low-latency communication (URLLC) is one of three main application scenarios of 5G communication systems, which is widely used in critical service fields such as industrial control, autonomous driving, smart grid management, and augmented reality/virtual reality. According to the definition of 3GPP, the main goals of the URLLC are a latency of 1ms and a reliability of 99.999%. In the futural 6G communication system, the targets of the latency and the reliability are enhanced up to 0.1ms and greater than 99.9999%, respectively, so as to match further ultra-reliability and low-latency communication of new application scenarios, such as a motion control scenario and a tactile network scenario. In order to match the new application scenarios, new codec technologies, like adaptive modulation and coding, transmit/receive diversity, hybrid automatic repeat request (HARQ), packet data convergence protocol (PDCP) retransmission, slot aggregation, repetition and other technologies, may be employed in the futural 6G systems to improve the data transmission reliability. Since the slot aggregation is an implementation way of the repetition, the slot aggregation and the repetition are not to be distinguished but collectively referred to as the repetition technology in the following description.

A semi-static scheduling means that all or part of scheduling information may be configured in advance via high layer signaling. For the case where only part of the scheduling information is configured, specific scheduling information may be delivered and activated through a physical downlink control channel (PDCCH), and is valid until being deactivated or the next reconfiguration/activation. The part of the scheduling information configured in advance via the high layer signaling may include a scheduling period, HARQ feedback resources, HARQ processes, a modulation coding scheme (MCS) table, a number of repetitions and other information. The specific scheduling information during an activation process may include MCS, transmission port(s), time-frequency resources, precoding, a layer number and other information. Once the configured information or the specific scheduling information during the activation process is successfully activated, the subsequent data transmissions are to follow the inherent information such as the MCS, the port(s) and the time-frequency resources. The semi-static scheduling may include grant-free scheduling and a semi-persistent scheduling.

In the first related art, the repetition technology is applied in the semi-static scheduling. In particular, for a downlink (DL) transmission, a base station (BS) uses the same or different redundancy versions to encode the same data according to the number of repetitions pre-configured in the semi-static scheduling and obtains multiple data, and then, transmits multiple data to user equipment (UE) through different time-domain or frequency-domain resources according to the pre-configured MCS. The UE combines the data transmitted in the different time-domain or frequency-domain resources as instructed, decodes and obtains the original data, and then, performs a cyclic redundancy check (CRC) checking on the decoded original data. After the CRC, if the final combined and decoded data is correct, an acknowledgment (ACK) message is fed back through a physical uplink control channel (PUCCH) or a physical uplink shared channel (PUSCH). Otherwise, a negative acknowledgment (NACK) message is fed back. After receiving the message fed back from the UE, the BS determines whether to trigger an HARQ retransmission.

For the UL transmission, the BS directly combines multiple received data, decodes the combined data to obtain the original data, performs the CRC checking on the original data to obtain the final checking result, and determines whether to trigger the HARQ retransmission based on the final checking result.

In the first related art, some scheduling information in a static scheduling, such as the MCS, the number of repetitions, the precoding and the layer number, is pre-configured and cannot be adjusted properly as the wireless channel between the BS and the UE varies, so that the data transmission rate and the data transmission reliability cannot be satisfied simultaneously to a certain extent.

The MCS may be pre-configured as the smallest MCS0 to ensure the reliability, but a higher-order MCS may be used to improve the data transmission rate in the case where every transmission can be received correctly due to good channel conditions in an actual data transmission process. However, the MCS is pre-configured via the high layer signaling or an activation message and cannot be adaptively adjusted according to the state of the wireless channel, which reduces the system transmission efficiency. On the contrary, a greater pre-configured MCS causes data transmission errors in the case of poor channel conditions. The HARQ retransmission may be employed to improve the reliability but causes additional latency introduced by the HARQ retransmission.

The number of repetitions is pre-configured. In the case of poor channel conditions, it may happen that the data transmitted for the first N times cannot be correctly decoded, but the data transmitted at the N-th time may be correctly decoded by combining with the first N data. At this time, the ACK is fed back and the BS learns that the UE has received the data correctly. However, as the channel state deteriorates by degrees, it may be followed that the data cannot be correctly received through N repetitions, which results in a decrease in the data transmission reliability. In the case of good channel conditions, the data transmitted each time can be correctly decoded. At this time, the time-frequency resources may be saved if the number of repetitions is reduced. However, the repetitions are pre-configured via the high layer signaling or the activation message and the number of repetitions cannot be adaptively adjusted according to the state of the wireless channel, which causes a waste of the time-frequency resources.

In the second related art, the BS adjusts the MCS with a link adaptation (LA) technology. That is, a channel quality indicator (CQI) or a signal-to-interference-noise ratio (SINR) is compensated based on the final checking result, and the MCS is re-determined based on the compensated CQI or SINR.

With respect to the LA technology, by taking the CQI as an example, the CQI compensation process is described (to which the SINR compensation process is similar). According to the final checking result, the CQI compensation process is:

$$
CQI_{Avg}(t) = \begin{cases} CQI_{avg}(t-1) + \Delta_{up}, \\ CQI_{avg}(t-1) - \Delta_{down}, \\ CQI_{avg}(t-1), \end{cases}
$$

if the feedback information is ACK if the feedback information is NACK if there is no feedback information

In particular, $\Delta_{up}$ and $\Delta_{down}$ indicate the step size of CQI upward compensation and the step size of CQI downward compensation, respectively, and follow the following conditions:

$$
\Delta_{down} = \frac{\Delta_{up}\left(1 - BLER_{target}\right)}{BLER_{target}}, \quad if\ \Delta_{down} \gg \Delta_{up}
$$

In particular, $BLER_{target}$ indicates a block error ratio (BLER) target to be satisfied, $BLER_{target} = 0.1$ for an enhanced mobile broadband (eMBB) user and $BLER_{target} = 0.00001$ for a URLLC user. $\Delta_{down}$ and $\Delta_{up}$ are expected to be adjusted according to service requirements and an actual convergence situation.

However, the repetition technology in the first related art only takes into account the final checking result after checking the final combined data, rather than any checking result corresponding to the intermediate transmitted data, so that the varies of the channel state during the data transmission cannot be determined based on the checking results corresponding to the intermediate transmitted data. As a result, even if the LA technology in the second related art is employed, it neither accurately compensates the CQI or the SINK, nor improves the data transmission reliability and the data transmission effectiveness. For example, the CRC checking on the data transmitted for the first time is failed due to the deterioration of the channel state when the UE receives the data transmitted for the first time, the CRC checking on the data transmitted for the second time combined with the data transmitted for the first time is successful because a coding gain of the second transmission compensates the effect of the deterioration of the channel state, and the ACK message is fed back to the BS. The BS compensates the average CQI upwards according to the formula corresponding to the ACK message fed back, which may lead to the selection of the higher-order MCS. However, the transmission adopting the higher-order MCS may cause data transmission errors due to poor channel conditions.

In order to make the purposes, the technical solutions and the advantages of the present specification clearer, the technical solutions of the present specification are clearly and completely described below in conjunction with specific examples in the present specification and the corresponding drawings thereof. It is obvious that the described examples are only some, rather than all of the examples of the present specification. Based on the examples provided in the present specification, all of other examples, which are obtained by those of ordinary skill in the art without creative work, fall within the protection scope of the present specification.

The technical solutions provided by various examples of the present specification are described in detail below in conjunction with the accompanying drawings.

In the example of the present specification, the repetition technology and the LA technology may be applied to the semi-static scheduling or a dynamic scheduling, so as to adaptively adjust a data transmission strategy between the BS and the UE based on the checking results of all the data transmitted between the BS and the UE. In particular, the transmission strategy may include the number of repetitions, the MCS, the time-frequency resources for data transmissions, the transmission port(s), the precoding, etc.

Specifically, a receiver receives various data transmitted by a transmitter. The various data is obtained by the transmitter through encoding a same original data with redundant information separately. Then, the receiver checks the various data to obtain the checking results of the various data, and processes the checking results of first N data in the various data to obtain a first checking result in overall corresponding to the first N data, where N is a positive integer.

Finally, an adjusted transmission strategy is obtained according to a determined channel quality parameter for transmitting the various data between the transmitter and the receiver, and data transmissions are performed in accordance with the adjusted transmission strategy. The channel quality parameter is determined based on the first checking result and the various checking results of the remaining data in the various data.

The receiver may be a BS or UE, and the transmitter may be a BS or UE. There are different data transmission directions between the BS and the UE, that is, a UL transmission and a DL transmission. The DL transmission means that the BS transmits data to the UE. In this case, the transmitter is the BS, and the receiver is the UE. The UL transmission means that the UE transmits data to the BS. In this case, the transmitter is the UE and the receiver is the BS. In addition, the UE may include a terminal device such as a mobile phone and a computer.

Therefore, various data transmitted between the receiver and the transmitter may include various DL data transmitted by the BS and received by the UE, or various UL data transmitted from the UE to the BS.

Furthermore, the various data transmitted by the transmitter is obtained by encoding the same original data by adopting redundant information separately.

Next, it describes how to determine the checking results and adjust the transmission strategy in a DL transmission process.

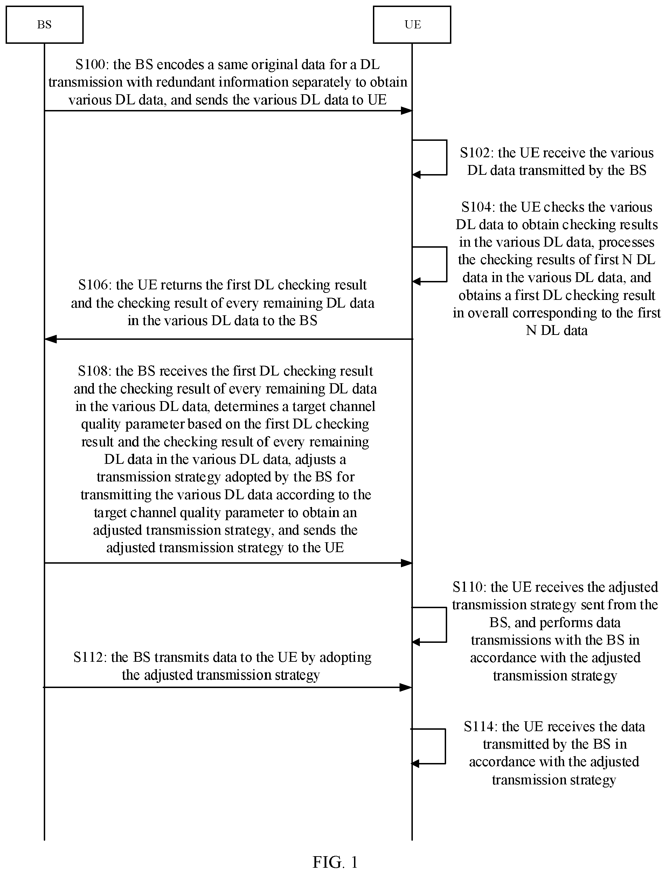

The specific steps are illustrated in FIG. 1. FIG. 1 is a schematic flowchart of a data transmission method in a DL transmission process provided by an example of the present specification, including:

S100: the BS encodes a same original data for a DL transmission with redundant information separately to obtain various DL data, and sends the various DL data to UE.

S102: the UE receives the various DL data transmitted by the BS.

S104: the UE checks the various DL data to obtain checking results of the various DL data, processes the checking results of first N DL data in the various DL data, and obtains a first DL checking result in overall corresponding to the first N DL data.

S106: the UE returns the first DL checking result and the checking result of every remaining DL data in the various DL data to the BS.

S108: the BS receives the first DL checking result and the checking result of every remaining DL data in the various DL data, determines a target channel quality parameter based on the first DL checking result and the checking result of every remaining DL data in the various DL data, adjusts a transmission strategy adopted by the BS for transmitting the various DL data according to the target channel quality parameter to obtain an adjusted transmission strategy, and sends the adjusted transmission strategy to the UE.

S110: the UE receives the adjusted transmission strategy sent from the BS, and performs data transmissions with the BS in accordance with the adjusted transmission strategy.

S112: the BS transmits data to the UE by adopting the adjusted transmission strategy.

S114: the UE receives the data transmitted by the BS in accordance with the adjusted transmission strategy.

Based on the data transmission method illustrated in FIG. 1, the channel state when the BS transmits the various DL data is determined, and the transmission strategy adopted for transmitting the various DL data between the UE and the BS is adjusted.

In the examples of the present specification, the BS may encode a same original data for the DL transmission with redundant information respectively based on a current number of repetitions, and obtain multiple encoded data as the various DL data. The quantity of the DL data is the same as the number of repetitions. Each of the various DL data may consist of the original data for the DL transmission and the redundant information. In addition, the redundant information carried by each DL data may be different or identical.

After obtaining the various DL data, the BS may transmit them to the UE through designated time-frequency resources in accordance with the transmission strategy adopted for transmitting the various DL data between the BS and the UE. In particular, the various DL data may be transmitted in the designated time-frequency resources in one slot, or transmitted in the designated time-frequency resources in different slots. In addition, the designated time-frequency resources corresponding to the various DL data may be pre-configured, or may be obtained by detecting a PDCCH.

The UE receives the various DL data transmitted by the BS from the designated time-frequency resources, and performs subsequent operations on the various received DL data.

After receiving the various DL data, the UE may check the various DL data to obtain checking results of the various DL data.

Specifically, for each received DL data, the UE may check the DL data according to other DL data received before receiving the DL data and obtain the checking result of the DL data.

Further, for each DL data, the DL data is combined with the other DL data received before to obtain combined data. Then, the combined data is decoded according to a coding rate corresponding to an MCS to obtain the decoded data. At last, the decoded data is checked to obtain a checking result of the DL data. Finally, the checking result of every DL data is obtained. The combining manner may be an incremental redundancy combining or a Chase combining. The checking way may be a CRC checking.

In addition, the checking result of each DL data may include being successful or being failed. Being successful may be encoded with "1", and being failed may be encoded with "0".

It should be noted that during performing the repetitions, since the UE combines the other DL data received before each DL data when checking the DL data, it is against in theory a case where the checking on the DL data is failed but the checking on other DL data received before the DL data is successful. In the actual transmission process, the failed checking on the DL data, even if happens, is considered to be successful. In addition, during performing the repetitions, as long as there is the DL data on which the checking is successful, the original data corresponding to the various DL data is considered to be transmitted successfully.

For example, taking two repetitions as an example, the BS obtains two DL data by encoding the original data, and transmits these two DL data to the UE. The UE decodes and checks the two transmitted DL data. Since the DL data corresponding to the second transmission is to be combined with the DL data corresponding to the first transmission, the actual transmission process is generally against the case where the checking on the DL data corresponding to the first transmission is successful but the checking on the DL data corresponding to the second transmission is failed. If such case occurs, the checking on the DL data corresponding to the second transmission is still considered to be successful. Therefore, all of the possible checking results of the two transmitted DL data are shown in Table 1.

Table 1

| The checking result of the DL data corresponding to the first transmission | The checking result of the DL data corresponding to the second transmission |
| --- | --- |
| Successful: 1 | Successful: 1 |
| Failed: 0 | Successful: 1 |
| Failed: 0 | Failed: 0 |

In the example of the present specification, after the checking result of every DL data is determined, in order to reduce the number of bits of feedback information sent by the UE to the BS, the checking results of the first N DL data in the various DL data may be processed based on the checking results of the various DL data to obtain the first DL checking result in overall corresponding to the first N DL data, where N is a positive integer.

In order to determine whether there is a checking failure in the checking results of the first N DL data in the various DL data, an AND operation may be performed on the checking results of the first N DL data in the various DL data to obtain a first DL checking result. If there is a checking failure in the checking results of the first N DL data in the various DL data, the first DL checking result is failed, and if all the checking results of the first N DL data are successful, the first DL checking result is successful.

For example: the number of repetitions is 4, and there are 4 DL data corresponding to the same original data. The checking result of the first DL data is 0, the checking result of the second DL data is 0, the checking result of the third DL data is 1, and the checking result of the fourth DL data is 1. If N is 3, the AND operation is performed on the checking results of the first three DL data to obtain the first DL checking result of 0.

After the first DL checking result is determined, it may determine feedback information that represents the first DL checking result and the checking result of every remaining DL data based on the first DL checking result and the checking results of every remaining DL data in the various DL data, and send the feedback information to the BS. The data format of the feedback information may be in binary.

For example: the number of repetitions is 4, and there are 4 DL data corresponding to the same original data. The checking result of the first DL data is 0, the checking result of the second DL data is 0, the checking result of the third DL data is 1, and the checking result of the fourth DL data is 1. If N is 2, the AND operation is performed on the checking results of the first two DL data to obtain the first DL checking result of 0. The last two DL data is the remaining DL data, and in this case, the feedback information is 011.

Meanwhile, the UE sends a monitored instantaneous channel quality parameter to the BS.

The BS receives the feedback information and the instantaneous channel quality parameter. The BS determines the first DL checking result and the checking result of every remaining DL data according to the feedback information. A target compensation rule is determined based on the first DL checking result and the checking result of every remaining DL data. Then, the channel quality parameter used when the BS transmits the various DL data is compensated according to the determined target compensation rule and the instantaneous channel quality parameter to obtain a compensated channel quality parameter as a target channel quality parameter. The channel quality parameter in the DL process may be an average channel quality parameter, such as an average CQI. Finally, the transmission strategy adopted for transmitting the various DL data between the BS and the UE is adjusted according to the target channel quality parameter to obtain the adjusted transmission strategy. That is, the adjusted transmission strategy corresponding to the target channel quality parameter is determined according to a mapping relationship between channel quality parameters and transmission strategies between the BS and the UE.

In view of the above, the feedback information is determined based on the first DL checking result and the checking results of the remaining DL data. In order to reduce the number of bits of the feedback information, the checking results of the remaining DL data may be processed.

Specifically, the UE may perform an OR operation on the checking result of every remaining DL data in the various DL data, and obtains a second DL checking result in overall corresponding to the remaining DL data. The second DL checking result is successful if there is a checking success in the checking result of every remaining DL data, and the second DL checking result is failed if the checking result of every remaining DL data is failed. Then, the feedback information that represents the first DL checking result and the second DL checking result is obtained by encoding the first DL checking result and the second DL checking result. In this way, the feedback information has only two bits.

For example: the number of repetitions is 4, and there are 4 DL data corresponding to the same original data. The checking result of the first DL data is 0, the checking result of the second DL data is 0, the checking result of the third DL data is 1, and the checking result of the fourth DL data is 1. If N is 2, the AND operation is performed on the checking results of the first two DL data to obtain the first DL checking result of 0. The last two DL data is the remaining DL. The OR operation is performed on the checking results of the remaining DL data to obtain the second DL checking result of 1. In this case, the feedback information is 01.

In order to further reduce the number of bits occupied by the feedback information sent from the UE to the BS, the feedback information of "1" indicates that the checking on all the DL data is successful, the feedback information of "0" indicates that the checking on all the DL data is failed, and the feedback information of "01" indicates that there are one or more DL data in the various DL data on which the checking is failed. The feedback information of " 1" and "01" means that the same original data corresponding to the various DL data is successfully transmitted. The feedback information of "0" means that the same original data corresponding to the various DL data fails to be transmitted, and an HARQ retransmission may need to be triggered, as shown in Table 2.

Table 2

| The first DL checking result | The second DL checking result | Feedback |
|---|---|---|
| Successful: 1 | Successful: 1 | 1 |
| Failed: 0 | Successful: 1 | 01 |
| Failed: 0 | Failed: 0 | 0 |

The above is a case where the UE reports the feedback information of one original data. However, in the process of the UE transmitting the feedback information to the BS through a PUCCH, the current 3GPP supports the PUCCH to transmit the feedback information of one original data, or the feedback information of two different data of the same user. It even supports to multiplex the feedback information and a scheduling request (SR) information, channel state information (CSI), etc. The CSI may include: CQI. Therefore, the following three cases need to be considered. Firstly, for a URLLC service, it needs to transmit the feedback information timely. In the case of limited PUCCH resources, the feedback information of two different original data of the same user needs the same PUCCH resource for feedback. Therefore, the case where the PUCCH feeds back the feedback information of two different original data needs to be considered. Secondly, since the URLLC service generally adopts a granted-free scheduling, there is no case of multiplexing the feedback information and the SR. However, considering the coexistence of an eMBB service and the URLLC service for a single user, it needs to consider the case of multiplexing the feedback information and the SR. Thirdly, the feedback information, the SR and the CSI may be multiplexed and reported within a period for reporting the CSI, and thus the case of reporting the feedback information, the SR and the CSI simultaneously needs to be considered. The feedback information of one original data may include the first DL checking result and the checking result of every remaining DL data, or the feedback information of one original data may include the first DL checking result and the second DL checking result.

Next, in an example of taking the first DL checking result and the second DL checking result as the feedback information, the multiplexing of the feedback information with other information is described.

Regarding a case where the feedback information of two different original data is transmitted to the BS simultaneously.

When the original data for the DL transmission corresponding to a plurality of transmission processes satisfies the preset condition, the UE may combine the checking results from the feedback information of two different original data to obtain recombined feedback information that indicates the checking results of two different original data and sent to the BS. That is to say, the feedback information may be configured to indicate the checking results of the various DL data corresponding to one original data, and alternatively be configured to indicate the checking results of various DL data corresponding to multiple original data.

It is determined that the data corresponding to the plurality of transmission processes satisfies the above preset condition if the BS can transmit the data corresponding to the plurality of transmission processes within a setting duration.

For example, if the setting duration is an air interface time, and the original data may include Data 1 and Data 2. If the BS can transmit Data 1 and Data 2 within one air interface time, it is determined that Data 1 and Data 2 satisfy the above preset condition. On the contrary, if the BS transmits Data 1 in one air interface time and transmits Data 2 in another air interface time, it is determined that Data 1 and Data 2 do not satisfy the above preset condition.

Specifically, when the original data for the DL transmission corresponding to the plurality of transmission processes satisfies the preset condition, for each original data, the checking information of the original data may be determined based on the first DL checking result obtained after processing the first N DL data in the various DL data corresponding to the original data and the checking result of every remaining DL data in the various DL data corresponding to the original data. The checking information may be used to indicate the first DL checking result and the checking result of every remaining DL data. For example, if the first DL checking result is 0 and the checking results of the remaining DL data are 1 and 1, respectively, the checking information is 011.

Then, the feedback information including the checking information of the data corresponding to the plurality of transmission processes is obtained by combining the checking information of the data corresponding to the plurality of transmission processes.

Specifically, for each original data, it may combine the checking information of the original data and the checking information of other original data to obtain processed information as the feedback information. The checking information of the original data and the checking information of other original data may be combined in a preset order to obtain the processed information. The preset order may refer to high-low bits of the checking information corresponding to the various original data.

In addition, for each original data, the checking information of the original data is determined based on the first DL checking result obtained after processing the first N DL data in the various DL data corresponding to the original data and the second DL checking result in overall of the remaining DL data in the various DL data corresponding to the original data. The checking information indicates the first DL checking result and the second DL checking result corresponding to the original data. Then, the checking information of each original data is encoded to obtain the feedback information that represents the checking information of every original data. For example, if the first DL checking result is 0 and the second DL checking result in overall corresponding to the remaining DL data is 1, the checking information is 01.

Taking a case where the checking information corresponding to the second original data is located at high bit as an example, the feedback information represents the checking information corresponding to two different original data which have been combined, as shown in Table 3.

Table 3

| Feedback Information | | The checking information of the first original data | | |
|---|---|---|---|---|
| | | 0 | 01 | 1 |
| The checking information of the second original data | 0 | 00 | 001 | 01 |
| | 01 | 010 | 0101 | 011 |
| | 1 | 10 | 101 | 11 |

It can be seen from Table 3 that only one feedback information after combining the checking information of the two original data occupies more bits. In order to reduce the number of bits occupied by the feedback information in overall, "0101" may be replaced with any one of "000", "100", "110", and "111".

Taking 110 as an example, the feedback information after the replacement is shown in Table 4.

Table 4

| Feedback Information | The checking information of the first original data | | |
| --- | --- | --- | --- |
| | 0 | 01 | 1 |
| The checking information of the second original data | 0 | 00 | 001 | 01 |
| | 01 | 010 | 110 | 011 |
| | 1 | 10 | 101 | 11 |

Regarding a case of multiplexing the feedback information and the SR.

The SR and the feedback information are encoded to obtain a coding sequence that includes the feedback information and information indicating whether there is an SR. Integrated information is obtained according to the coding sequence and is sent to the BS through the same channel. The SR may be multiplexed with the feedback information of one original data, or may be multiplexed with the feedback information that represents the check information of multiple original data.

Taking a case of multiplexing the feedback information of one original data and the SR as an example, if the number of bits occupied by the feedback information is smaller than or equal to 2 bits, PUCCH format 0 may be used to implement the multiplexing of the feedback information and the SR. In addition, PUCCH format 1 supports a maximum of 2-bit data, and PUCCH formats 2, 3, and 4 support data greater than 2 bits. When PUCCH format 0 is used, a mapping table about whether the feedback information of one original data is multiplexed with the SR is shown in Table 5. Mcs in Table 5 is a cyclic shift value.

Table 5

| Feedback Information | 0 | 01 | 1 |
| --- | --- | --- | --- |
| Cyclic shift (SR multiplexing) | Mcs=1 | Mcs=5 | Mcs=9 |
| Cyclic shift (no multiplexing) | Mcs=0 | Mcs=4 | Mcs=8 |

Regarding a case of multiplexing the feedback information, the SR, and the CSI.

The UE may multiplex the SR, the CSI and the feedback information to obtain integrated information, and send the integrated information to the BS through the same channel. The data structure of the integrated information may be:

$$O_{ACK} + O_{SR} + O_{CSI} + O_{CRC}.$$

$O_{ACK}$ refers to the feedback information, $O_{SR}$ refers to the SR, $O_{CSI}$ refers to the CSI, and $O_{CRC}$ refers to CRC checking code of the integrated information.

After receiving the information sent by the UE, the BS may determine the feedback information of every original data transmitted by the UE according to the number of bits of the received information and whether it is multiplexed.

Since the BS schedules time-frequency resources between the BS and the UE, the BS clearly knows whether the information sent by the UE is multiplexed with the SR and the CSI.

Therefore, if the received information is not multiplexed with the SR and the CSI, the information received by the BS is merely the feedback information. If it is the feedback information for representing one original data, the feedback information of one original data may be obtained directly by demodulating PUCCH format 0 or format 1. It is determined whether the transmission of the original data is successful according to the obtained feedback information. If it is the feedback information for representing the checking information of multiple original data, the number of bits of the feedback information is greater than 2 and thus, PUCCH formats 2, 3, and 4 need to be used.

Taking a case where the checking information of the first original data located at high bit as an example, it is determined that the transmission of the first original data is successful if the first bit in the feedback information is 1, and if the first bit in the feedback information is 0, the checking information of every original data, i.e., the feedback information of every original data, is determined according to the quantity of the original data. If the last bit in the feedback information is 1, it is determined that the transmission of the last original data is successful.

If the SR and the CSI are multiplexed in the received information, the information received by the BS is the integrated information. Taking a case where the checking information of the first original data located at high bit as an example, it is determined that the transmission of the first original data is successful if the first bit in the integrated information is 1, and if the first bit is 0, the number of bits indicating the feedback information in the integrated information is determined according to the number of bits of the received integrated information, the number of bits of the SR and the number of bits of the CSI. Then, the feedback information of every original data may be determined according to the quantity of the original data.

After determining the feedback information of every original data, for each original data, the BS may determine a channel compensation parameter corresponding to the original data according to the feedback information of the original data. Thereafter, a target compensation rule for the BS to transmit the original data is determined according to the channel compensation parameter corresponding to the original data. The channel quality parameter for transmitting the various DL data corresponding to the original data is compensated according to the target compensation rule, and the target channel quality parameter is obtained. The target channel quality parameter may be an average channel quality parameter.

For determining the channel compensation parameter corresponding to the original data according to the feedback information of the original data, it may determine the channel compensation parameter corresponding to the original data based on the first DL checking result and the second DL checking result included in the feedback information of the original data, or determine the channel compensation parameter corresponding to the original data based on the first DL checking result and the checking result of every remaining DL data included in the feedback information of the original data. The channel compensation parameter is located in [0, 1]. The target compensation rule may be a compensation formula, with different channel compensation parameters corresponding to different compensation rules.

Different compensation rules are described by taking the feedback information including the first DL checking result and the second DL checking result as an example.

If the feedback information is 1, the channel upward compensation rule is:

$$CQI_{Avg}(t) = CQI_{avg}(t-1) + \Delta_{up}.$$

$CQI_{Avg}(t)$ refers to the target channel quality parameter, $CQI_{avg}(t-1)$ refers to the channel quality parameter used when the BS transmits the various DL data, and $\Delta_{up}$ refers to an upward compensation step size, i.e., a designated value.

The channel downward compensation rule is:

$$CQI_{Avg}(t) = CQI_{avg}(t-1) - \theta * \Delta_{down}.$$

$CQI_{Avg}(t)$ refers to the target channel quality parameter, $CQI_{avg}(t-1)$ refers to the channel quality parameter used when the BS transmits the various DL data, and $\Delta_{down}$ refers to a downward compensation step size, i.e., a designated value. $\theta$, as the channel compensation parameter, may be adjusted according to the requirements on transmission rate and reliability. If the feedback information is 0, $\theta=1$. That is,

$$CQI_{Avg}(t) = CQI_{avg}(t-1) - \Delta_{down}.$$

If the feedback information is 01, $\theta=0.5$. That is,

$$CQI_{Avg}(t) = CQI_{avg}(t-1) - 0.5 * \Delta_{down}.$$

In addition, if there is no feedback information, the channel quality parameter for the BS and the UE to transmit the various DL data is not compensated, $\theta=0$. That is,

$$CQI_{Avg}(t) = CQI_{avg}(t-1).$$

After determining the target channel quality parameter, the BS may adjust, according to the target channel quality parameter, the transmission strategy adopted for transmitting the various DL data corresponding to the original data between the UE and the BS and obtain the adjusted transmission strategy. The adjusted transmission strategy may include a target MCS and an adjusted number of repetitions.

The BS sends the adjusted transmission strategy to the UE when monitoring that the transmission strategy adopted for transmitting the various data between the BS and the UE runs longer than a valid working duration. The UE updates the transmission strategy between the UE and the BS according to the received and adjusted transmission strategy. Then, data transmissions are performed in accordance with the updated transmission strategy (i.e., the adjusted transmission strategy).

Finally, the BS may transmit data to the UE by adopting the adjusted transmission strategy, and the UE receives the data transmitted by the BS in accordance with the adjusted transmission strategy and decodes and checks the received data.

Taking a case of various DL data corresponding to one original data as an example, it describes the adjustment of the transmission strategy and the delivery of the adjusted transmission strategy.

For the MCS, the BS may first determine the target MCS that has a mapping relationship with the target channel quality parameter according to the mapping relationship between channel quality parameters and transmission strategies between the BS and the UE. Then, the target MCS is determined as the transmission strategy adopted for subsequent data transmissions between the BS and the UE. The order of the MCS is positively correlated with the size of the target channel quality parameter. That is, the greater the target channel quality parameter is, the higher the order of the MCS is.

When the order of the MCS adopted by the BS for transmitting the various DL data is equal to a maximum value or a minimum value, the BS may adjust the number of repetitions adopted for transmitting the various DL data between the BS and the UE according to the number of repetitions adopted for transmitting the various DL data between the BS and the UE and the target channel quality parameter, and obtain the adjusted number of repetitions. That is, the adjusted number of repetitions is determined as the transmission strategy adopted for subsequent data transmissions between the BS and the UE. The number of repetitions is negatively correlated with the size of the target channel quality parameter. That is, the greater the target channel quality parameter is, the smaller the number of repetitions is.

In the case where the order of the MCS adopted for transmitting the various DL data between the BS and the UE is equal to the maximum value while the target channel quality parameter is greater than the channel quality parameter for transmitting the various DL data, it takes a number of repetitions smaller than the number of repetitions adopted for transmitting the various DL data between the BS and the UE as the adjusted number of repetitions.

That is, when the order of the MCS is equal to the maximum value while the average CQI is increasing, the number of repetitions may be reduced by adjusting from the current number of repetitions to the next available smaller number of repetitions. For example, the current number of repetitions is 4 and the next available smaller number of repetitions is 3.

In the case where the order of the MCS adopted for transmitting the various DL data between the BS and the UE is equal to the minimum value while the target channel quality parameter is smaller than the channel quality parameter for transmitting the various DL data, the BS may take a number of repetitions greater than the number of repetitions adopted for transmitting the various DL data between the BS and the UE as the adjusted number of repetitions.

When the order of the MCS has been adjusted to the minimum value while the average CQI is decreasing, it may be adjusted from the current number of repetitions to the next available greater number of repetitions, that is, the number of repetitions is increased to ensure reliability. For example, the current number of repetitions is 4 and the next available greater number of repetitions is 5.

For the number of repetitions, the BS may first determine the adjusted number of repetitions according to the target channel quality parameter and the number of repetitions adopted for transmitting the various DL data between the BS and the UE, and adjust the number of repetitions adopted for transmitting the various DL data between the BS and the UE according to the adjusted number of repetitions. That is, the adjusted number of repetitions is determined as the transmission strategy adopted for subsequent data transmissions between the BS and the UE.

If the target channel quality parameter is greater than the channel quality parameter for transmitting the various DL data, it may take the number of repetitions smaller than the number of repetitions adopted for transmitting the various DL data between the BS and the UE as the adjusted number of repetitions; if the target channel quality parameter is smaller than the channel quality parameter for transmitting the various DL data, it may take the number of repetitions greater than the number of repetitions adopted for transmitting the various DL data between the BS and the UE as the adjusted number of repetitions.

When the number of repetitions adopted for transmitting the various DL data between the BS and the UE is equal to the maximum or minimum value, the target MCS that has the mapping relationship with the target channel quality parameter may be determined according to the target channel quality parameter. Then, the transmission strategy adopted for transmitting the various DL data between the BS and the UE is adjusted according to the target MCS. The target MCS is determined as the transmission strategy adopted for the subsequent data transmissions between the BS and the UE.

In the case where the number of repetitions adopt when the various DL data is transmitted between the BS and the UE is equal to the maximum value while the target channel quality parameter is smaller than the channel quality parameter for transmitting the various DL data, the target MCS whose order is smaller than the MCS adopted for transmitting the various DL data between the BS and the UE may be determined.

In the case where the number of repetitions adopted for transmitting the various DL data between the BS and the UE is equal to the minimum value while the target channel quality parameter is greater than the channel quality parameter for transmitting the various DL data, the target MCS whose order is greater than the MCS adopted for transmitting the various DL data between the BS and the UE may be determined.

After determining the adjusted transmission strategy adopted for the subsequent data transmissions between the BS and the UE according to the target channel quality parameter, the BS may send the adjusted transmission strategy that has been determined to the UE, so that according to the adjusted transmission strategy that is received, the UE updates the transmission strategy that is stored in the UE and is adopted for transmitting the various DL data between the UE and the BS. That is, the UE and the BS synchronize the adjusted transmission strategy adopted for subsequent data transmissions.

For the target MCS in the adjusted transmission strategy, the BS may add the target MCS to downlink control information (DCI), and send the DCI with the target MCS added to the UE through the PDCCH.

In addition, in order to avoid increasing the burden of transmissions and blind detections through the PDCCH in the system due to updating the MCS too frequently, a valid working duration of the MCS may be configured for the semi-static scheduling. The BS sends the redetermined target MCS to the UE when monitoring that the MCS adopted for transmitting the various DL data runs longer than the valid working duration. That is, if the MCS adopted for transmitting the various DL data is within the valid working duration, the target MCS, even if being redetermined, is not to be sent to the UE for update. Instead, it is to update the MCS adopted for transmitting the various DL data by sending the DCI through the first available PDCCH after the valid duration.

In particular, the update of the scheduling information such as the MCS in semi-static scheduling is expected to take the parameters such as an update period of MCS, a configuration period of semi-static scheduling, a configuring and scheduling period of PDCCH together into account, and then perform the operation of updating the scheduling information such as the MCS.

In addition, the minimum period that is capable of being configured is 1 slot for the DL semi-static scheduling, i.e., the semi-persistent scheduling, and 2 symbols for the UL grant-free scheduling. The minimum period of the search opportunity of the PDCCH through which the DCI is sent may be 1 slot. The update period of MCS is related to the channel state and a reporting period of instantaneous CQI.

For the adjusted number of repetitions, the BS may send it to the UE in three ways.

In the first way, the adjusted number of repetitions is configured to the UE via radio resource control (RRC).

In particular, after the media access control (MAC) layer of the BS determines the adjusted number of repetitions, the adjusted number of repetitions is reported to the RRC layer. After receiving the adjusted number of repetitions, the RRC layer triggers an RRC reconfiguration according to the adjusted number of repetitions, so as to inform the UE of the adjusted number of repetitions.

In the second way, the BS sends the adjusted number of repetitions to the UE via DCI.

The BS may implicitly send the adjusted number of repetitions to the UE via the DCI, or may add a field in the DCI for explicitly sending the adjusted number of repetitions to the UE.

With respect to implicitly sending the adjusted number of repetitions.

In the case where the MAC layer of the BS detects that the order of the MCS is equal to the maximum or minimum value and detects that the number of repetitions is expected to be adjusted, the DCI that carries an instruction of updating the number of repetitions in the semi-static scheduling is sent in the next available PDCCH.

After receiving the DCI, the UE reduces the current number of repetitions by default and adopts an available number of repetitions smaller than the current number of repetitions when detecting that the order of the MCS is equal to the maximum value. For example, when the available numbers of repetitions are 2, 3, 4, 5, 6, 7, 8 and 16 and the current number of repetitions is 5, the adjusted number of repetitions is 4.

The UE increases the current number of repetitions by default and adopts an available number of repetitions greater than the current number of repetitions when detecting that the order of the MCS is equal to the minimum value. For example, when the available numbers of repetitions are 2, 3, 4, 5, 6, 7, 8 and 16 and the current number of repetitions is 5, the adjusted number of repetitions is 6.

With respect to explicitly sending the adjusted number of repetitions.

The BS adds one new field in the DCI for indicating the number of repetitions. The new field may be named *Index of number of repetition.* Currently, it may be set to 3 bits and indicate up to 8 options as the indexes, for example, {2, 3, 4, 5, 6, 7, 8, 16}. If there are more options for the number of repetitions in future, the field may be extended to support more numbers of repetitions.

It can be noted that when the adjusted number of repetitions is sent via the DCI, the adjusted number of repetitions takes effect at the slot at which the DCI is sent.

In the third way, the adjusted number of repetitions is sent to the UE via the media access control-control element (MAC CE).

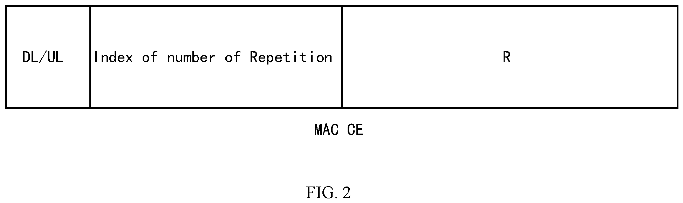

In particular, when the MAC layer of the BS detects that the number of repetitions is expected to be adjusted, the adjusted number of repetitions may be added into the MAC CE and be sent to the UE through a physical downlink shared channel (PDSCH). The UE feeds back whether the MAC CE is received correctly through ACK/NACK. If the ACK is received by the BS, the adjusted number of repetitions included in the MAC CE takes effect at the next slot behind the slot at which the UE returns the ACK. The data structure of the MAC CE is illustrated in FIG. 2.

In FIG. 2, *DL/UL* indicates the UL or DL for which the MAC CE is suitable, and *Index of number of Repetition* indicates the index of the number of repetitions, which is 3 bits currently and indicates up to 8 options, for example, {2, 3, 4, 5, 6, 7, 8, 16}. In future, if there are more options for the number of repetitions, it may be extended through a reserved field (i.e., R).

In addition, since the wireless channel varies rapidly, in order to avoid the problem that the number of repetitions is updated too frequently, it may configure a valid working duration for the number of repetitions. When monitoring that the number of repetitions adopted for transmitting the various DL data runs longer than the valid working duration, the BS sends the adjusted number of repetitions that is redetermined to the UE. That is, if the number of repetitions adopted for transmitting the various DL data is within the valid working duration, the adjusted repetitions, even if determined, are not sent to the UE for update.

The above is the DL transmission process, in which the UE sends the feedback information to the BS, and the BS determines the adjusted transmission strategy according to the feedback information and sends the adjusted transmission strategy to the UE in different ways.

Next, it is to describe that the adjusted transmission strategy is determined in the UL transmission process. In particular, the method that the BS determines the adjusted transmission strategy in the UL transmissions is similar to the method of determining the adjusted transmission strategy in the DL transmissions, except that the channel quality parameter represented by the CQI in the DL transmissions is replaced by the channel quality parameter represented by SINR.

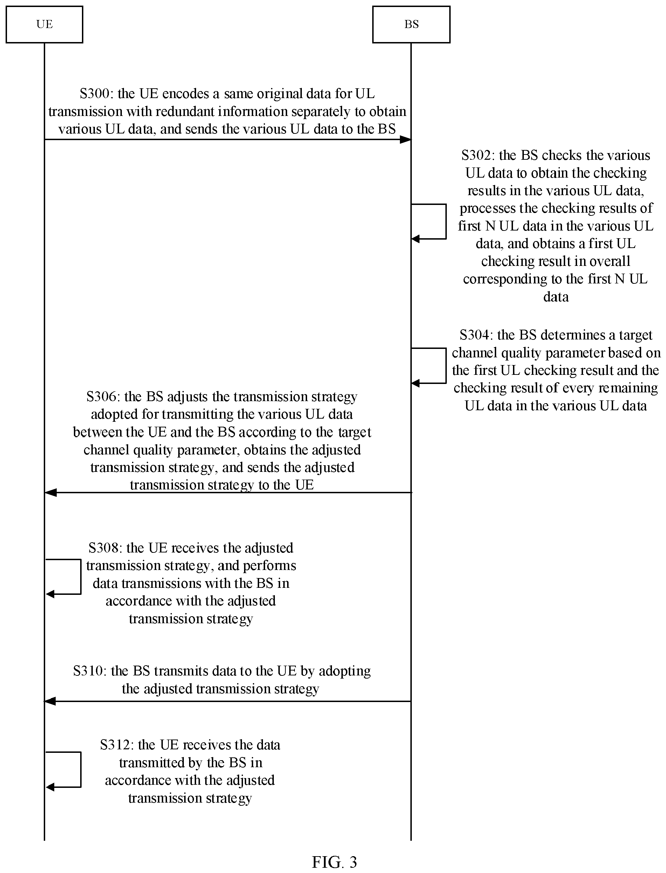

The specific steps are illustrated in FIG. 3. FIG. 3 is a schematic flowchart of a data transmission method in a DL transmission process provided by an example of the present specification, including:

S300: the UE encodes a same original data for UL transmission with redundant information separately to obtain various UL data, and sends the various UL data to the BS.

S302: the BS checks the various UL data to obtain the checking results of the various UL data, processes the checking results of first N UL data in the various UL data, and obtains a first UL checking result in overall corresponding to the first N UL data.

S304: the BS determines a target channel quality parameter based on the first UL checking result and the checking result of every remaining UL data in the various UL data.

S306: the BS adjusts the transmission strategy adopted for transmitting the various UL data between the UE and the BS according to the target channel quality parameter, obtains the adjusted transmission strategy, and sends the adjusted transmission strategy to the UE.

S308: the UE receives the adjusted transmission strategy, and performs data transmissions with the BS in accordance with the adjusted transmission strategy.

S310: the BS transmits data to the UE by adopting the adjusted transmission strategy.

S312: the UE receives the data transmitted by the BS in accordance with the adjusted transmission strategy.

Based on the data transmission method illustrated in FIG. 3, the channel state of transmitting the various UL data between the UE and the BS is determined, and the transmission strategy adopted for transmitting the various UL data between the UE and the BS is adjusted.

In the example of the present specification, the UE may encode the same original data for the UL transmission with redundant information separately based on a current number of repetitions to obtain multiple encoded data as the various UL data. The quantity of the UL data is the same as the number of repetitions. Each UL data may consist of the original data for the UL transmission and the redundant information. In addition, the redundant information carried by each UL data may be different or identical.

After obtaining the various UL data, the UE may transmit them to the UE through designated time-frequency resources in accordance with the transmission strategy for transmitting the various UL data between the BS and the UE. The various UL data may be transmitted in the designated time-frequency resources within one slot, or in the designated time-frequency resources of different lots. In addition, the designated time-frequency resources corresponding to the various UL data may be pre-configured.

The BS receives the various UL data transmitted by the UE from the designated time-frequency resources, and performs subsequent processing on the various received UL data.

After receiving the various UL data, the BS may check them to obtain the checking results of the various UL data.

Specifically, the BS checks each received UL data according to other UL data received before receiving the UL data, and obtains the checking result of the UL data.

Further, for each UL data, other UL data received before receiving the UL data is combined with the UL data to obtain combined data. Then, the combined data is decoded according to a coding rate corresponding to an MCS to obtain the decoded data. At last, the decoded data is checked to obtain the checking result of the UL data. Finally, the checking result of every UL data is obtained. The combining manner may be an Incremental Redundancy combining or a Chase combining. The checking manner may be a CRC.

In addition, the checking result of every UL data may include success or failure. The success may be encoded with "1", and the failure can be encoded with "0".

It should be noted that when checking each UL data during performing the repetitions, since the BS combines other UL data received before the UL data, it is against in theory a case where the checking on the UL data is failed but the checking on other UL data received before the UL data is successful. In the actual transmission process, the failed checking on the UL data, even if happens, is considered to be successful. In addition, as long as there is the UL data on which the checking is successful during performing the repetitions, the original data corresponding to the various UL data is considered to be transmitted successfully.

For example, taking two repetitions as an example, the UE encodes the original data to obtain two UL data, and transmits the two UL data to the BS. The BS decodes and checks the two transmitted UL data. Since the UL data corresponding to the second transmission is to be combined with the UL data corresponding to the first transmission, the actual transmission process is generally against the case where the checking on the UL data corresponding to the first transmission is successful but the checking on the UL data corresponding to the second transmission is failed. If such case occurs, the checking on the UL data corresponding to the second transmission is still considered to be successful. Therefore, all of the possible checking results of the two transmitted UL data are shown in Table 1.

Table 1

| The checking result of the UL data corresponding to the first transmission | The checking result of the UL data corresponding to the second transmission |
|---|---|
| Successful: 1 | Successful: 1 |
| Failed: 0 | Successful: 1 |
| Failed: 0 | Failed: 0 |

In the example of the present specification, after the checking result of every UL data is determined, based on the checking results of the various UL data, the checking results of the first N UL data in the various UL data may be processed to obtain the first UL checking result in overall corresponding to the first N UL data, where N is a positive integer.

In order to determine whether there is a checking failure in the checking results of the first N UL data in the various UL data, an AND operation may be performed on the checking results of the first N UL data in the various UL data to obtain the first UL checking result. If there are one or more checking failures in the checking results of the first N UL data, the first UL checking result is failed, and if all the checking results of the first N UL data are successful, the first UL checking result is successful.

For example: the number of repetitions is 4, and there are 4 UL data corresponding to the same original data. The checking result of the first UL data is 0, the checking result of the second UL data is 0, the checking result of the third UL data is 1, and the checking result of the fourth UL data is 1. If N is 3, the AND operation is performed on the checking results of the first three UL data to obtain the first UL checking result of 0.

After the first UL checking result is determined, a target compensation rule may be determined based on the first UL checking result and the checking result of every remaining UL data in the various UL data. Then, an average channel quality parameter for transmitting the various UL data between the UE and the BS is compensated according to the determined target compensation rule and an instantaneous channel quality parameter to obtain the target channel quality parameter. The channel quality parameter in the UL process may be SINR.

For determining the target compensation rule based on the first UL checking result and the checking result of every remaining UL data in the various UL data, it may determine a channel compensation parameter based on the first UL checking result and the checking result of every remaining UL data in the various UL data. According to the channel compensation parameter, the target compensation rule is determined.

In addition, the BS may perform an OR operation on the checking result of every remaining UL data in the various UL data to obtain a second UL checking result in overall corresponding to the remaining UL data. The second UL checking result is successful if there is a checking success in the checking result of every remaining UL data, and the second UL checking result is failed if the checking result of every remaining UL data is failed.

Then, the first UL checking result and the second UL checking result are used to determine the target compensation rule. Then, according to the determined target compensation rule and the instantaneous channel quality parameter, the average channel quality parameter for transmitting the various UL data between the UE and the BS is compensated to obtain the target channel quality parameter.

For determining the target compensation rule based on the first UL checking result and the second UL checking result, it may determine the channel compensation parameter based on the first UL checking result and the second UL checking result. According to the channel compensation parameter, the target compensation rule is determined. The channel compensation parameter is located in [0, 1]. The target compensation rule may be a compensation formula, with different channel compensation parameters corresponding to different compensation rules.

Different compensation rules are described in an example where the feedback information includes the first UL checking result and the second UL checking result.

If the checking results are all 1, the channel upward compensation rule is:

$$\text{SINR}_{\text{Avg}}(t) = \text{SINR}_{\text{avg}}(t-1) + \Delta_{\text{up}}.$$

$\text{SINR}_{\text{Avg}}(t)$ refers to the target channel quality parameter, $\text{SINR}(t-1)$ refers to the channel quality parameter used when the UE transmits the various UL data, and $\Delta_{\text{up}}$ refers to an upward compensation step size, i.e., a designated value.

The channel downward compensation rule is:

$$\text{SINR}_{\text{Avg}}(t) = \text{SINR}_{\text{avg}}(t-1) - \theta * \Delta_{\text{down}}.$$

$\text{SINR}_{\text{Avg}}(t)$ refers to the target channel quality parameter, $\text{SINR}_{\text{avg}}(t-1)$ refers to the channel quality parameter used when the UE transmits the various UL data, and $\Delta_{\text{down}}$ refers to a downward compensation step size, i.e., a designated value. $\theta$, as the channel compensation parameter, may be adjusted according to the requirements on transmission rate and reliability. If the checking result is 0, $\theta=1$. That is,

$$\text{SINR}_{\text{Avg}}(t) = \text{SINR}_{\text{avg}}(t-1) - \Delta_{\text{down}}.$$

If the checking result is 01, $\theta=0.5$. That is,

$$\text{SINR}_{\text{Avg}}(t) = \text{SINR}_{\text{avg}}(t-1) - 0.5 * \Delta_{\text{down}}.$$

After determining the target channel quality parameter, the BS adjusts, according to the target channel quality parameter, the transmission strategy adopted for transmitting the various UL data between the UE and the BS, and obtains the adjusted transmission strategy. The adjusted transmission strategy may include a target MCS and the adjusted number of repetitions.

When monitoring that the transmission strategy adopted for transmitting the various UL data between the UE and the BS runs longer than a valid working duration, the BS sends the adjusted transmission strategy to the UE. The UE updates the transmission strategy between the BS and the UE according to the received adjusted transmission strategy. Then, data transmissions are performed in accordance with the updated transmission strategy (i.e., the adjusted transmission strategy). Thereafter, the BS may adopt the adjusted transmission strategy to transmit data to the UE, and the UE receives the data transmitted by the BS in accordance with the adjusted transmission strategy and decodes and checks the received data.

When determining the adjusted transmission strategy, for the MCS, the BS may first determine the target MCS that has a mapping relationship with the target channel quality parameter according to a mapping relationship between channel quality parameters and transmission strategies between the BS and the UE. Then, the transmission strategy adopted for transmitting the various UL data between the BS and the UE is adjusted according to the target MCS. That is, the target MCS is determined as the transmission strategy adopted for subsequent data transmissions between the BS and the UE. The order of the MCS is positively correlated with the size of the target channel quality parameter. That is, the greater the target channel quality parameter is, the higher the order of the MCS is.

When the order of the MCS adopted for transmitting the various UL data between the BS and the UE is equal to a maximum value or a minimum value, the BS may adjust the number of repetitions adopted for transmitting the various UL data between the BS and the UE according to the number of repetitions adopted for transmitting the various UL data and the target channel quality parameter, and obtains the adjusted number of repetitions. That is, the adjusted number of repetitions is determined as the transmission strategy adopted for subsequent data transmissions between the BS and the UE. The number of repetitions is negatively correlated with the size of the target channel quality parameter. That is, the greater the target channel quality parameter is, the smaller the number of repetitions is.

In the case where the order of the MCS adopted for transmitting the various UL data between the BS and the UE is equal to the maximum value while the target channel quality parameter is greater than the channel quality parameter for transmitting the various UL data, it takes a number of repetitions smaller than the number of repetitions adopted for transmitting the various UL data between the BS and the UE as the adjusted number of repetitions.

That is, when the order of the MCS is equal to the maximum value while the average SINR is increasing, the number of repetitions may be reduced by adjusting from the current number of repetitions to the next available smaller number of repetitions. For example, the current number of repetitions is 4 and the next available smaller number of repetitions is 3.

In the case where the order of the MCS adopted for transmitting the various UL data between the BS and the UE is equal to the minimum value while the target channel quality parameter is smaller than the channel quality parameter for transmitting the various UL data, the BS may take a number of repetitions greater than the number of repetitions adopted for transmitting the various UL data between the BS and the UE as the adjusted number of repetitions.

When the order of the MCS has been adjusted to the minimum value while the average SINR is decreasing, it may be adjusted from the current number of repetitions to the next available greater number of repetitions, that is, the number of repetitions is increased to ensure the reliability. For example, the current number of repetitions is 4 and the next available greater number of repetitions is 5.

For the number of repetitions, the BS may first determine the adjusted number of repetitions according to the target channel quality parameter and the number of repetitions adopted for transmitting the various UL data between the BS and the UE, and adjust the number of repetitions adopted for transmitting the various UL data between the BS and the UE according to the adjusted number of repetitions. That is, the adjusted number of repetitions is determined as the transmission strategy adopted for subsequent data transmissions between the BS and the UE.

If the target channel quality parameter is greater than the channel quality parameter for transmitting the various UL data, it may take the number of repetitions smaller than the number of repetitions adopted for transmitting the various UL data between the BS and the UE as the adjusted number of repetitions; if the target channel quality parameter is smaller than the channel quality parameter for transmitting the various UL data, it may take the number of repetitions greater than the number of repetitions adopted for transmitting the various UL data between the BS and the UE as the adjusted number of repetitions.

When the number of repetitions adopted for transmitting the various UL data between the BS and the UE is equal to the maximum or minimum value, the target MCS that has the mapping relationship with the target channel quality parameter may be determined according to the target channel quality parameter. Then, the transmission strategy adopted for transmitting the various UL data between the BS and the UE is adjusted according to the target MCS. That is, the target MCS is determined as the transmission strategy adopted for subsequent data transmissions between the BS and the UE.

When the number of repetitions adopted for transmitting the various UL data between the BS and the UE is equal to the maximum value and the target channel quality parameter is smaller than the channel quality parameter for transmitting the various UL data, the target MCS whose order is smaller than the MSC adopted for transmitting the various UL data between the BS and the UE may be determined.

When the number of repetitions for transmitting the various UL data between the BS and the UE is equal to the minimum value and the target channel quality parameter is greater than the channel quality parameter for transmitting the various UL data, the target MCS whose order is higher than the MSC adopted for transmitting the various UL data between the BS and the UE may be determined.

In addition, the approach for sending the adjusted transmission strategy to the UE in the UL transmission process is the same as the approach for sending the adjusted transmission strategy to the UE in the DL transmission process, which is not repeated here. The UL transmission may include an uplink granted-free scheduling, and the DL transmission may include a semi-persistent scheduling.

In addition, in the dynamic scheduling, the BS may directly send the adjusted transmission strategy to the UE via the DCI once determining the adjusted transmission strategy adopted for the data transmissions between the UE and the BS.

It should be noted that the data transmission methods provided in the present specification may be applied to a semi-static scheduling and a dynamic scheduling (e.g., a granted scheduling), and the data transmission methods provided in the present specification may be applied to 5G-Advanced or 6G.

It can be seen from the above methods illustrated in FIGs. 1 and 3 that the BS or UE in the present specification performs the checking on the various data obtained by encoding the same original data for the UL or DL transmission with redundant information separately, and obtains the checking results of the various data. The BS determines the channel quality parameter for transmitting the various data between the BS and the UE based on a determined checking result in overall corresponding to the first N data in the various data and the checking result of every remaining data. The adjusted transmission strategy is obtained according to the channel quality parameter, and the data transmissions are performed in accordance with the adjusted transmission strategy. According to this method, the changes of the channel quality parameter between the BS and the UE are obtained based on the checking result of every data, and thus the transmission strategy following the changes of the channel quality parameter is obtained, which can improve a data transmission reliability on the basis of ensuring a data transmission rate.

The above describes the data transmission methods provided by the examples of the present specification. Based on the same concept, the present specification also provides corresponding apparatuses, storage media and electronic devices.

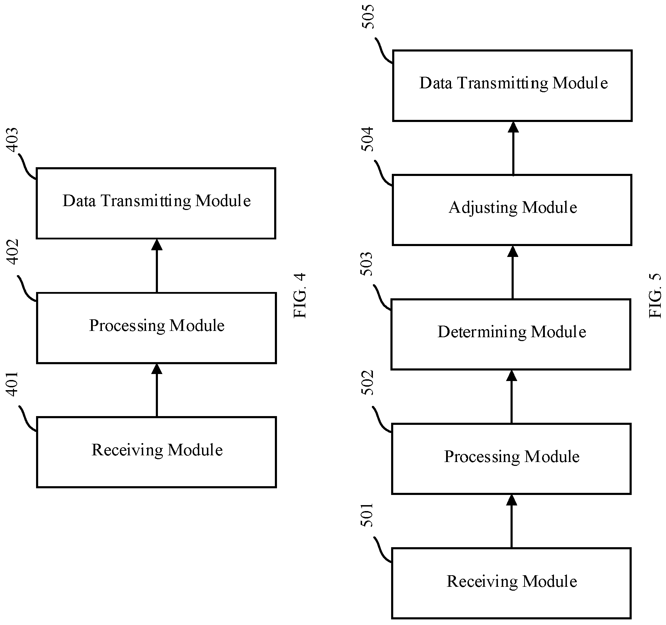

FIG. 4 is a schematic structural diagram of a data transmission apparatus provided by an example of the present specification, and the apparatus includes:

a receiving module 401, configured to receive, by UE, various DL data transmitted by a BS; and/or, transmit, by the UE, various UL data to the BS, so that the BS obtains a first UL checking result in overall corresponding to first N UL data in the various UL data and a checking result of every remaining UL data in the various UL data, where N is a positive integer, and where various data transmitted by a transmitter is obtained by encoding same original data with redundant information separately;

a processing module 402, configured to when the UE receives the various DL data transmitted by the BS, by the UE, check the various DL data to obtain checking results of the various DL data; obtain a first DL checking result in overall corresponding to first N DL data by processing the checking results of the first N DL data in the various DL data; and return the first DL checking result and the checking result of every remaining DL data in the various DL data to the BS; and

a data transmitting module 403, configured to receive a transmission strategy that has been adjusted by the BS, and perform data transmissions with the BS in accordance with the adjusted transmission strategy, where the adjusted transmission strategy is determined by the BS according to a target channel quality parameter, and the target channel quality parameter is determined by the BS based on the checking result in overall corresponding to first N data in the various data transmitted by the transmitter and the checking result of every remaining data in the various data.

Optionally, the processing module 402 is specifically configured to obtain the first DL checking result in overall corresponding to the first N DL data by performing an AND operation on the checking results of the first N DL data in the various DL data, where the first DL checking result is failed if there is a failure in the checking results of the first N DL data, and the first DL checking result is successful if all the checking results of the first N DL data are successful.

Optionally, the processing module 402 is specifically configured to determine feedback information based on the first DL checking result and the checking result of every remaining DL data in the various DL data, and send the feedback information to the BS.

Optionally, the processing module 402 is specifically configured to obtain the feedback information that represents the first DL checking result and the checking result of every remaining DL data by encoding the first DL checking result and the checking result of every remaining DL data in the various DL data.

Optionally, the processing module 402 is specifically configured to obtain a second DL checking result in overall corresponding to the remaining DL data by performing an OR operation on the checking result of every remaining DL data in the various DL data, where the second DL checking result is successful if there is a success in the checking result of every remaining DL data, and the second DL checking result is failed if the checking result of every remaining DL data is failed; and obtain the feedback information that represents the first DL checking result and the second DL checking result by encoding the first DL checking result and the second DL checking result.

Optionally, the processing module 402 is specifically configured to for each original data, when the original data for a DL transmission is data corresponding to a plurality of transmission processes that satisfies a preset condition, for each original data, determine checking information of the original data based on the first DL checking result obtained by processing the first N DL data in the various DL data corresponding to the original data and the checking result of every remaining DL data in the various DL data corresponding to the original data, where it is determined that the data corresponding to the plurality of transmission processes satisfies the preset condition if the data corresponding to the plurality of transmission processes is transmitted by the transmitter in a setting duration; and obtain the feedback information including the checking information of the data corresponding to the plurality of transmission processes by combining and processing the checking information of the data corresponding to the plurality of transmission processes.

Optionally, the processing module 402 is specifically configured to encode an SR and the feedback information, obtain a coding sequence that includes the feedback information and information indicating whether there is the SR, and send the coding sequence to the BS.

Optionally, the target channel quality parameter is obtained by the BS through compensating a channel quality parameter used when the transmitter transmits the various data according to a determined target compensation rule, where the target compensation rule is determined by the BS based on the checking result in overall corresponding to the first N data in the various data transmitted by the transmitter and the checking result of every remaining data in the various data.

FIG. 5 is a schematic structural diagram of a data transmission apparatus provided by an example of the present specification, and the apparatus includes:

a receiving module 501, configured to receive, by a BS, various UL data transmitted by UE; and/or, transmit, by the BS, various DL data to the UE, so that the UE obtains a first DL checking result in overall corresponding to first N DL data in the various DL data and a checking result of every remaining DL data in the various DL data, where N is a positive integer, and where various data transmitted by a transmitter is obtained by encoding same original data with redundant information separately;

a processing module 502, configured to when the BS receives the various UL data transmitted by the UE, by the BS, check the various UL data to obtain checking results of the various UL data; obtain a first UL checking result in overall corresponding to first N UL data by processing the checking results of the first N UL data in the various UL data; and when the BS transmits the various DL data to the UE, receive the first DL checking result in overall corresponding to the first N DL data in the various DL data returned from the UE and the checking result of every remaining DL data in the various DL data;

a determining module 503, configured to determine a target channel quality parameter based on a checking result in overall corresponding to first N data in the various data transmitted by the transmitter and the checking result of every remaining data in the various data;

an adjusting module 504, configured to obtain an adjusted transmission strategy by adjusting a transmission strategy adopted by the transmitter for transmitting the various data according to the target channel quality parameter; and

a data transmitting module 505, configured to send the adjusted transmission strategy to the UE for performing data transmissions with the BS in accordance with the adjusted transmission strategy.

Optionally, the receiving module 501 is specifically configured to receive feedback information sent by the UE, and determine, according to the feedback information, the first DL checking result in overall corresponding to the first N DL data in the various DL data and the checking result of every remaining DL data in the various DL data, where the feedback information is obtained by the UE after processing the checking results of the first N DL data in the various DL data, and where the checking result of every DL data is obtained by the UE through checking the various DL data after receiving the various DL data transmitted by the BS.

Optionally, the determining module 503 is specifically configured to determine a target compensation rule based on the checking result in overall corresponding to the first N data in the various data transmitted by the transmitter and the checking result of every remaining data in the various data; and obtaining the target channel quality parameter by compensating the channel quality parameter used when the transmitter transmits the various data according to the target compensation rule.

The data transmitting module 505 is specifically configured to send the adjusted transmission strategy to the UE when detecting that the transmission strategy adopted by the transmitter for transmitting the various data runs longer than a valid working duration.

The present specification also provides a computer-readable storage medium storing a computer program, and the computer program, when being executed by one or more processors, performs the above data transmission methods provided in FIG. 1 and FIG. 3.

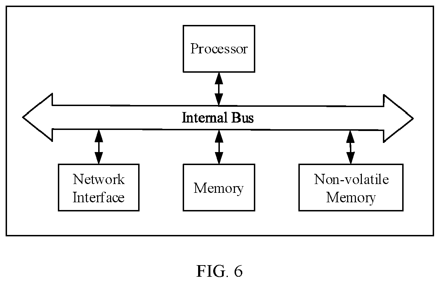

Based on the data transmission methods illustrated in FIG. 1 and FIG. 3, the examples of the present specification also provide a schematic structural diagram of the electronic device illustrated in FIG. 6. As illustrated in FIG. 6, at a hardware level, the electronic device includes a processor, an internal bus, a network interface, a memory, and a non-volatile memory, and of course may also include hardware required by other services. The processor reads the corresponding computer program from the non-volatile memory into the memory and then runs it, so as to implement the data transmission methods described in FIG. 1 and FIG. 3 above.

Of course, in addition to software implementations, the present specification does not exclude other implementations, such as through a logic element or a combination of software and hardware. That is to say, the execution subject of the according to processing process is not limited to various logic units, but may also be the hardware or the logic elements.

In the 1990s, the improvement on one technology can be clearly distinguished as the improvement on the hardware (e.g., the improvement on a circuit structure such as diode, transistor, switch, etc.) or the improvements on the software (the improvement on a method process). However, with the development of technologies, the improvement on many method processes may be regarded as a direct improvement on the hardware circuit structures today. Nearly all the designers achieve the corresponding hardware circuit structure by programming an improved method process into the hardware circuit. Therefore, it would be wrong to say that the improvement on the method process cannot be implemented by hardware physical modules. For example, a programmable logic device (PLD) (e.g., a field programmable gate array (FPGA)) is such an integrated circuit, the logic function of which is determined through programming the device by a user. It is programmed by the designers themselves to "integrate" a digital system onto the PLD, instead of asking a chip manufacturer to design and make a dedicated integrated circuit chip. Moreover, nowadays, instead of making the integrated circuit chips by hand, this kind of programming is mostly implemented by a software "logic compiler", which is similar to a software compiler used in developing and writing programs, but whose original codes before compiling are written in a specific programming language called a hardware description language (HDL). There is not only one kind of HDL, but many kinds, e.g., advanced Boolean expression language (ABEL), Altera hardware description language /(AHDL), Confluence, Cornell university programming Language (CUPL), HDCal, Java hardware description language (JHDL), Lava, Lola, MyHDL, PALASM, Ruby hardware description language (RHDL), etc. Currently, very-high-speed integrated circuit hardware description language (VHDL) and Verilog are the most popular ones. It can also be clear to those skilled in the art that it is easy to achieve the hardware circuit for implementing the logic method process only by performing a little logical programming for the method process in the above-mentioned hardware description languages and programming into the integrated circuit.

The controller may be implemented in any suitable way, for example, the controller may take the form of a microprocessor or a processor with a computer readable medium storing computer readable program codes (such as a software or a firmware) executable by the (micro)processor, a logic gate, a switch, an application specific integrated circuits (ASIC), a programmable logic controller and an embedded microcontroller. The examples of the controller include but not limited to the according to microcontrollers: ARC 625D, Atmel AT91SAM, Microchip PIC18F26K20 and Silicone Labs C8051F320. A memory controller may also be implemented as a part of the control logic of the memory. Those skilled in the art also know that, besides implementing the controller in pure computer-readable program codes, it is surely possible to make the controller implement the same functions in the form of a logic gate, a switch, an ASIC, a programmable logic controller, an embedded microcontroller and the like through the logic programming of the method process. Therefore, such a controller may be regarded as a hardware component, and the means included in it for implementing various functions may also be regarded as structures within the hardware component. Alternatively, the means for implementing the various functions may even be regarded as not only the software modules implementing the method but also the structures within the hardware component.

The systems, apparatus, modules, or units illustrated in the above examples may be implemented specifically by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

For convenience of description, the above apparatuses are described separately in terms of various units which are divided based on functions. Of course, the functions of the various units may be implemented in one software and/or hardware or a plurality of software and/or hardware when the present specification is implemented.

It can be understood by those skilled in the art that the examples of the present specification may be provided as methods, systems, or computer program products. Accordingly, the examples of the present specification may take the form of an entirely hardware, an entirely software, or a combination of software and hardware. Further, the present specification may take the form of a computer program product implemented on one or more computer-usable storage media (including, but not limited to, one or more disk memories, one or more CD-ROMs, one or more optical memories, etc.) that include computer-usable program codes therein.

The present specification is described by reference to flowcharts and/or block diagrams of the methods, the apparatuses (systems) and the computer program products according to the examples of the present specification. It can be understood that each procedure in the flowcharts and/or each block in the block diagrams, and the combination of certain procedures in the flowcharts and/or the combination of certain blocks in the block diagrams, may be implemented by computer program instructions. These computer program instructions may be provided to one or more processors of a general computer, a specialized computer, an embedded processing device or another programmable data processing device to produce a machine, so that the instructions executed by the one or more processors of the computer or another programmable data processing device produce one or more apparatuses for implementing the functions specified by one or more procedures in the flowcharts and/or one or more blocks in the block diagrams.

In addition, these computer program instructions may also be stored in one or more computer-readable memories capable of directing a computer or other programmable data processing devices to operate in a particular manner, so that the instructions stored in the one or more computer-readable memories produce a manufacture including an instruction device that implements a function specified by one or more procedures in the flowcharts and/or one or more blocks in the block diagrams.

These computer program instructions may also be loaded onto a computer or other programmable data processing devices, so that a series of operational steps are performed on the computer or the other programmable devices to produce a computer-implemented processing. Thereby, the instructions executed on the computer or the other programmable devices provide steps for implementing the functions specified by one or more procedures in the flowcharts and/or one or more blocks in the block diagrams.

In a typical configuration, the computing device includes one or more processors (CPUs), one or more input/output interfaces, one or more network interfaces, and one or more memories.

The memory may take the form of a non-permanent memory in a computer readable medium, a random access memory (RAM), and/or a nonvolatile memory, for example, a read-only memory (ROM) or a flash RAM. The memory is an example of the computer-readable medium.

The computer-readable medium, being either permanent or non-permanent and being either removable or non-removable, may be implemented by any method or technology for storing information. The information may include computer readable instructions, data structures, modules of a program, or other data. Examples of the computer storage medium include, but not limited to, a phase change memory (PRAM), a static random access memory (SRAM), a dynamic random access memory (DRAM), other types of RAM, an ROM, an electrically erasable programmable read-only memory (EEPROM), a flash memory or other memory technologies, a compact disc read-only memory (CD-ROM), a digital versatile disc (DVD) or other optical storages, a magnetic tape cartridge, a tape magnetic disk storage or other magnetic storage devices, or any other non-transmission medium, which may be used for storing the information that can be accessed by a computing device. As defined herein, the computer-readable medium excludes transitory computer-readable media, such as modulated data signals and carrier waves.

It is also noted that the term "including", "containing", or any variation thereof is intended to encompass non-exclusive inclusion, so that a process, method, article, or device including a series of elements includes not only those elements but also other elements not listed explicitly or those elements inherent to such a process, method, article, or device. Without more limitations, an element defined by the statement "including a..." shall not be precluded to include additional same elements present in a process, method, article or device including the element.

It can be understood by those skilled in the art that the examples of the present specification may be provided as methods, systems, or computer program products. Accordingly, the examples of the present specification may take the form of an entirely hardware, an entirely software, or a combination of software and hardware. Further, the present specification may take the form of a computer program product implemented on one or more computer-usable storage media (including, but not limited to, one or more disk memories, one or more CD-ROMs, one or more optical memories, etc.) that include computer-usable program codes therein.

The specification may be described in the general context of computer-executable instructions being executed by a computer, such as program modules. In general, the program modules include routines, programs, objects, components, data structures, etc. that perform particular tasks or implement particular abstract data types. The present specification may also be practiced in distributed computing environments where the tasks are performed by remote processing devices that are connected through a communications network. In the distributed computing environments, the program modules may be located on local and remote computer storage media which includes a storage device.

Each example in the present specification is described in a progressive manner, the same and similar parts of each example can be referred to each other, and each example focuses on the differences from other examples. Especially, the system examples are described more simply since they are substantially similar to the method examples, and their relevant parts may be referred to the description of the method examples.

The above only describes the examples of the present specification, and is not intended to limit the present specification. The present specification is subject to various changes and variations for those skilled in the art. Any modifications, equivalent substitutions, improvements, etc. made within the spirit and principle of the present specification shall be included within the scope of the claims of the present specification.

**Claims**

1. A data transmission method, comprising:

   receiving, by user equipment, UE, various downlink, DL, data transmitted by a base station, BS; and/or, transmitting, by the UE, various uplink, UL, data to the BS, so that the BS obtains a first UL checking result in overall corresponding to first N UL data in the various UL data and a checking result of every remaining UL data in the various UL data, wherein N is a positive integer, and wherein various data transmitted by a transmitter is obtained by encoding a same original data with redundant information separately;
   when the UE receives the various DL data transmitted by the BS, by the UE,

      checking the various DL data to obtain checking results of the various DL data;
      obtaining a first DL checking result in overall corresponding to first N DL data by processing the checking results of the first N DL data in the various DL data; and
      returning the first DL checking result and the checking result of every remaining DL data in the various DL data to the BS; and

receiving a transmission strategy that has been adjusted by the BS, and performing data transmissions with the BS in accordance with the adjusted transmission strategy, wherein the adjusted transmission strategy is determined by the BS according to a target channel quality parameter, and the target channel quality parameter is determined by the BS based on the checking result in overall corresponding to first N data in the various data transmitted by the transmitter and the checking result of every remaining data in the various data.

2. The method according to claim 1, wherein obtaining the first DL checking result in overall corresponding to the first N DL data by processing the checking results of the first N DL data in the various DL data comprises:
obtaining the first DL checking result in overall corresponding to the first N DL data by performing an AND operation on the checking results of the first N DL data in the various DL data, wherein the first DL checking result is failed if there is a failure in the checking results of the first N DL data, and the first DL checking result is successful if all the checking results of the first N DL data are successful.

3. The method according to claim 1, wherein returning the first DL checking result and the checking result of every remaining DL data in the various DL data to the BS comprises:

   determining feedback information based on the first DL checking result and the checking result of every remaining DL data in the various DL data, and
   sending the feedback information to the BS.

4. The method according to claim 3, wherein determining the feedback information based on the first DL checking result and the checking result of every remaining DL data in the various DL data comprises:
obtaining the feedback information for representing the first DL checking result and the checking result of every remaining DL data by encoding the first DL checking result and the checking result of every remaining DL data in the various DL data.

5. The method according to claim 3, wherein determining the feedback information based on the first DL checking result and the checking result of every remaining DL data in the various DL data comprises:

   obtaining a second DL checking result in overall corresponding to the remaining DL data by performing an OR operation on the checking result of every remaining DL data in the various DL data, wherein the second DL checking result is successful if there is a success in the checking result of every remaining DL data, and the second DL checking result is failed if the checking result of every remaining DL data is failed; and
   obtaining the feedback information that represents the first DL checking result and the second DL checking result by encoding the first DL checking result and the second DL checking result.

6. The method according to claim 3, wherein determining the feedback information based on the first DL checking result and the checking result of every remaining DL data in the various DL data comprises:

   when the original data for a DL transmission is data corresponding to a plurality of transmission processes that satisfies a preset condition, for each original data, determining checking information of the original data based on the first DL checking result obtained by processing the first N DL data in the various DL data corresponding to the original data and the checking result of every remaining DL data in the various DL data corresponding to the original data, wherein it is determined that the data corresponding to the plurality of transmission processes that satisfies the preset condition if the data corresponding to the plurality of transmission processes is transmitted by the transmitter in a setting duration; and
   obtaining the feedback information comprising the checking information of the data corresponding to the plurality of transmission processes by combining and processing the checking information of the data corresponding to the plurality of transmission processes.

7. The method according to claim 3, wherein sending the feedback information to the BS comprises:

   encoding a scheduling request, SR, and the feedback information,
   obtaining a coding sequence that comprises the feedback information and information indicating whether there is an SR and
   sending the coding sequence to the BS.

8. The method according to claim 1, wherein the target channel quality parameter is obtained by the BS through compensating a channel quality parameter used when the transmitter transmits the various data according to a determined target compensation rule, wherein the target compensation rule is determined by the BS based on the checking result in overall corresponding to the first N data in the various data transmitted by the transmitter and the checking result of every remaining data in the various data.

9. A data transmission method, comprising:

receiving, by a base station, BS, various uplink, UL, data transmitted by user equipment, UE; and/or, transmitting, by the BS, various downlink, DL, data to the UE, so that the UE obtains a first DL checking result in overall corresponding to first N DL data in the various DL data and a checking result of every remaining DL data in the various DL data, wherein N is a positive integer, and wherein various data transmitted by a transmitter is obtained by encoding a same original data with redundant information separately;
when the BS receives the various UL data transmitted by the UE, by the BS,

checking the various UL data to obtain checking results of the various UL data;
obtaining a first UL checking result in overall corresponding to first N UL data by processing the checking results of the first N UL data in the various UL data; and

when the BS transmits the various DL data to the UE,
receiving the first DL checking result in overall corresponding to the first N DL data in the various DL data returned from the UE and the checking result of every remaining DL data in the various DL data;
determining a target channel quality parameter based on a checking result in overall corresponding to first N data in the various data transmitted by the transmitter and the checking result of every remaining data in the various data;
obtaining an adjusted transmission strategy by adjusting a transmission strategy adopted by the transmitter for transmitting the various data according to the target channel quality parameter; and
sending the adjusted transmission strategy to the UE for performing data transmissions with the BS in accordance with the adjusted transmission strategy.

10. The method according to claim 9, wherein receiving the first DL checking result in overall corresponding to the first N DL data in the various DL data returned from the UE and the checking result of every remaining DL data in the various DL data comprises:

receiving feedback information sent by the UE, and
determining, according to the feedback information, the first DL checking result in overall corresponding to the first N DL data in the various DL data and the checking result of every remaining DL data in the various DL data, wherein the feedback information is obtained by the UE after processing the checking results of the first N DL data in the various DL data, and
wherein the checking result of every DL data is obtained by the UE through checking the various DL data after receiving the various DL data transmitted by the BS.

11. The method according to claim 9 or 10, wherein determining the target channel quality parameter based on the checking result in overall corresponding to the first N data in the various data transmitted by the transmitter and the checking result of every remaining data in the various data comprises:

determining a target compensation rule based on the checking result in overall corresponding to the first N data in the various data transmitted by the transmitter and the checking result of every remaining data in the various data; and
obtaining the target channel quality parameter by compensating the channel quality parameter used when the transmitter transmits the various data according to the target compensation rule.

12. The method according to claim 9, wherein sending the adjusted transmission strategy to the UE comprises:
sending the adjusted transmission strategy to the UE when monitoring that the transmission strategy adopted by the transmitter for transmitting the various data runs longer than a valid working duration.

13. A data transmission apparatus, comprising:

a receiving module, configured to receive, by user equipment, UE, various downlink, DL, data transmitted by a base station, BS; and/or, transmit, by the UE, various uplink, UL, data to the BS, so that the BS obtains a first UL checking result in overall corresponding to first N UL data in the various UL data and a checking result of every remaining UL data in the various UL data, wherein N is a positive integer, and wherein various data transmitted by a transmitter is obtained by encoding a same original data with redundant information separately;

a processing module, configured to when the UE receives the various DL data transmitted by the BS, by the UE, check the various DL data to obtain checking results of the various DL data; obtain a first DL checking result in overall corresponding to first N DL data by processing the checking results of the first N DL data in the various DL data; and return the first DL checking result and the checking result of every remaining DL data in the various DL data to the BS; and

a data transmitting module, configured to receive a transmission strategy that has been adjusted by the BS, and perform data transmissions with the BS in accordance with the adjusted transmission strategy, wherein the adjusted transmission strategy is determined by the BS according to a target channel quality parameter, and the target channel quality parameter is determined by the BS based on the checking result in overall corresponding to first N data in the various data transmitted by the transmitter and the checking result of every remaining data in the various data.

14. A data transmission apparatus, comprising:

a receiving module, configured to receive, by a base station, BS, various uplink, UL, data transmitted by user equipment, UE; and/or, transmit, by the BS, various downlink, DL, data to the UE, so that the UE obtains a first DL checking result in overall corresponding to first N DL data in the various DL data and a checking result of every remaining DL data in the various DL data, wherein N is a positive integer, and wherein various data transmitted by a transmitter is obtained by encoding a same original data with redundant information separately;

a processing module, configured to when the BS receives the various UL data transmitted by the UE, by the BS, check the various UL data to obtain checking results of the various UL data; obtain a first UL checking result in overall corresponding to first N UL data by processing the checking results of the first N UL data in the various UL data; and when the BS transmits the various DL data to the UE, receive the first DL checking result in overall corresponding to the first N DL data in the various DL data returned from the UE and the checking result of every remaining DL data in the various DL data;

a determining module, configured to determine a target channel quality parameter based on a checking result in overall corresponding to first N data in the various data transmitted by the transmitter and the checking result of every remaining data in the various data;

an adjusting module, configured to obtain an adjusted transmission strategy by adjusting a transmission strategy adopted by the transmitter for transmitting the various data according to the target channel quality parameter; and

a data transmitting module, configured to send the adjusted transmission strategy to the UE for performing data transmissions with the BS in accordance with the adjusted transmission strategy.

15. A computer-readable storage medium storing a computer program, wherein the computer program, when executed by one or more processors, implements the method according to any one of claims 1-12.

16. An electronic device, comprising:

one or more memories,
one or more processors, and
a computer program stored in the one or more memories and capable of running on the one or more processors; wherein the one or more processors, when executing the program, implement the method according to any one of claims 1-12.

BS

UE

S100: the BS encodes a same original data for a DL transmission with redundant information separately to obtain various DL data, and sends the various DL data to UE

S102: the UE receive the various DL data transmitted by the BS

S104: the UE checks the various DL data to obtain checking results in the various DL data, processes the checking results of first N DL data in the various DL data, and obtains a first DL checking result in overall corresponding to the first N DL data

S106: the UE returns the first DL checking result and the checking result of every remaining DL data in the various DL data to the BS

S108: the BS receives the first DL checking result and the checking result of every remaining DL data in the various DL data, determines a target channel quality parameter based on the first DL checking result and the checking result of every remaining DL data in the various DL data, adjusts a transmission strategy adopted by the BS for transmitting the various DL data according to the target channel quality parameter to obtain an adjusted transmission strategy, and sends the adjusted transmission strategy to the UE

S110: the UE receives the adjusted transmission strategy sent from the BS, and performs data transmissions with the BS in accordance with the adjusted transmission strategy

S112: the BS transmits data to the UE by adopting the adjusted transmission strategy

S114: the UE receives the data transmitted by the BS in accordance with the adjusted transmission strategy

FIG. 1

| DL/UL | Index of number of Repetition | R |
|---|---|---|

MAC CE

FIG. 2

| UE | | BS |
|---|---|---|

S300: the UE encodes a same original data for UL transmission with redundant information separately to obtain various UL data, and sends the various UL data to the BS

S302: the BS checks the various UL data to obtain the checking results in the various UL data, processes the checking results of first N UL data in the various UL data, and obtains a first UL checking result in overall corresponding to the first N UL data

S304: the BS determines a target channel quality parameter based on the first UL checking result and the checking result of every remaining UL data in the various UL data

S306: the BS adjusts the transmission strategy adopted for transmitting the various UL data between the UE and the BS according to the target channel quality parameter, obtains the adjusted transmission strategy, and sends the adjusted transmission strategy to the UE

S308: the UE receives the adjusted transmission strategy, and performs data transmissions with the BS in accordance with the adjusted transmission strategy

S310: the BS transmits data to the UE by adopting the adjusted transmission strategy

S312: the UE receives the data transmitted by the BS in accordance with the adjusted transmission strategy

FIG. 3

401 402 403

Receiving Module → Processing Module → Data Transmitting Module

FIG. 4

501 502 503 504 505

Receiving Module → Processing Module → Determining Module → Adjusting Module → Data Transmitting Module

FIG. 5

FIG. 6

## INTERNATIONAL SEARCH REPORT

| | International application No. |
|---|---|
| | **PCT/CN2022/103272** |

**A. CLASSIFICATION OF SUBJECT MATTER**

H04W 72/04(2009.01)i; H04W 72/12(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 半静态, 信道质量, 重复传输, 编码, 上行, 下行, 基站, 终端, 冗余, 校验, 可靠性, 调度, 信道状态, UE, eNB, gNB, transmit, SPS, HARQ, ACK, NACK, acknowledgement, MCS, CRC, cyclic redundancy check, PDCP, PDCCH, credibility, collocate, CSI

**C. DOCUMENTS CONSIDERED TO BE RELEVANT**

| Category* | Citation of document, with indication, where appropriate, of the relevant passages | Relevant to claim No. |
|---|---|---|
| Y | CN 103442443 A (DATANG MOBILE COMMUNICATIONS EQUIPMENT CO., LTD.) 11 December 2013 (2013-12-11) description, paragraphs [0004]-[0153] | 1-16 |
| Y | CN 109769305 A (POTEVIO INFORMATION TECHNOLOGY CO., LTD.) 17 May 2019 (2019-05-17) description, paragraphs [0005]-[0238] | 1-16 |
| A | CN 112422240 A (PENG CHENG LABORATORY) 26 February 2021 (2021-02-26) entire document | 1-16 |
| A | CN 108933642 A (POTEVIO INFORMATION TECHNOLOGY CO., LTD.) 04 December 2018 (2018-12-04) entire document | 1-16 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 December 2022** | **15 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/103272**

| Patent document cited in search report | | | Publication date (day/month/year) | Patent family member(s) | Publication date (day/month/year) |
|---|---|---|---|---|---|
| CN | 103442443 | A | 11 December 2013 | None | |
| CN | 109769305 | A | 17 May 2019 | None | |
| CN | 112422240 | A | 26 February 2021 | None | |
| CN | 108933642 | A | 04 December 2018 | None | |

Form PCT/ISA/210 (patent family annex) (January 2015)